# DEMANDE DE BREVET EUROPEEN

(11) **EP 2 532 415 A1**
(43) Date de publication de la demande: **12.12.2012**
(21) Numéro de dépôt: 12290165.5
(22) Date de dépôt: 16.05.2012
(51) Int. Cl.: B01D 53/14, B01D 53/62, C10L 3/10, F23J 15/04

(54) **Procédé de captage de composés acides par formation d'hydrates avec une étape de démixion**

(30) Priorité: 10.06.2011 FR 1101791
(71) Demandeur: IFP Energies nouvelles, 92852 Rueil-Malmaison Cedex (FR)
(72) Inventeur: Sinquin, Anne, 95870 Bezons (FR); Scondo, Alexandre, 92500 Rueil-Malmaison (FR)

(57) **Abrégé**

Pour capter les composés acides contenus dans un gaz, dans lequel on effectue les étapes suivantes :
a) on met en contact (R1) le gaz (2) avec une solution liquide (9) comportant un mélange d'une phase aqueuse et d'une phase non miscible avec l'eau pour produire une solution (3) comportant des hydrates de composés acides et un gaz appauvri en composés acides (10),
b) on divise (B1) la solution comportant des hydrates de composés acides en une fraction riche en hydrates et une fraction riche en phase non miscible avec l'eau,
c) on sépare (B1) la fraction riche en hydrates (4) de la fraction riche en phase non miscible avec l'eau (5),
d) on chauffe (R2) la fraction riche en hydrates pour libérer des composés acides gazeux (6) en dissociant les hydrates et pour produire une fraction riche en eau (8),
e) on mélange (B2) la fraction riche en phase non miscible obtenue à l'étape c) avec la fraction riche en eau produite à l'étape d) pour produire la solution liquide mise en oeuvre à l'étape a).

## Description

La présente invention concerne le domaine du captage de composés acides tels que le dioxyde de carbone (CO2) ou l'hydrogène sulfuré (H2S), contenu dans un gaz.

Les hydrates de gaz sont des cristaux solides qui se forment lorsque des molécules de gaz se trouvent en présence d'eau dans certaines conditions de pression et de température. Les molécules d'eau forment des cages dodécaédriques qui piègent des molécules de CO2, d'H2S, de méthane ou d'éthane, permettant de stocker de grandes quantités de ces molécules. En général, les hydrates de gaz se forment naturellement à basse température et à haute pression, de l'ordre de 16 bars à 0°C pour un gaz contenant 100% de CO2 et de l'ordre de 72 bars à 0°C pour un gaz contenant 16% de CO2.

Le document W02008142262 décrit un procédé d'enrichissement en gaz acides contenu dans un gaz, dans lequel un gaz de charge est mis en contact avec un mélange d'au moins deux phases liquides non miscibles entre elles, dont une phase aqueuse, pour former des hydrates. Le coulis d'hydrates est ensuite transporté dans un ballon de dissociation dans lequel les hydrates sont dissociés par chauffage. Le gaz issu du ballon de dissociation est enrichi en composés acides par rapport au gaz de charge.

La présente invention propose d'améliorer l'efficacité énergétique du procédé décrit par le document W02008142262 en séparant le coulis d'hydrates en deux fractions et en n'envoyant que la fraction enrichie en hydrates à l'étape de dissociation des hydrates afin de réduire la quantité de chaleur à apporter au coulis d'hydrates pour atteindre la température de dissociation des hydrates.

De manière générale, l'invention décrit un procédé de captage de composés acides contenus dans un gaz, dans lequel on effectue les étapes suivantes :
a) on met en contact le gaz avec une solution liquide comportant un mélange d'une phase aqueuse et d'une phase non miscible avec l'eau pour produire une solution comportant des hydrates de composés acides et un gaz appauvri en composés acides,
b) on divise la solution comportant des hydrates de composés acides en une fraction riche en hydrates et une fraction riche en phase non miscible avec l'eau,
c) on sépare la fraction riche en hydrates de la fraction riche en phase non miscible avec l'eau,
d) on chauffe la fraction riche en hydrates pour libérer des composés acides gazeux en dissociant les hydrates et pour produire une fraction riche en eau,
e) on mélange la fraction riche en phase non miscible obtenue à l'étape c) avec la fraction riche en eau produite à l'étape d) pour produire la solution liquide mise en oeuvre à l'étape a).

Selon l'invention, on peut effectuer les étapes b) et c) dans un appareil de séparation et on effectue l'étape d) dans un réacteur.

Alternativement, on peut effectuer successivement les étapes b), c) et d) dans le même dispositif.

On peut mettre oeuvre le procédé selon l'invention avec les conditions opératoires suivantes :
- on effectue l'étape a) à une pression comprise entre 0,1 et 20 bars et à une température comprise entre -5°C et 20°C
- on effectue les étapes b) et c) à une pression comprise entre 0,1 et 20 bars,
- on effectue l'étape d) à une pression comprise entre 5 et 70 bars et à une température comprise entre -5°C et 30°C,
- on effectue l'étape e) à une pression comprise entre 0,1 et 20 bars.

Alternativement, on peut mettre en oeuvre le procédé selon l'invention avec les conditions opératoires suivantes :
- on effectue l'étape a) à une pression comprise entre 0,1 et 20 bars et à une température comprise entre -5°C et 20°C
- on effectue les étapes b) et c) à une pression comprise entre 5 et 70 bars,
- on effectue l'étape d) à une pression comprise entre 5 et 70 bars et à une température comprise entre -5°C et 30°C,
- on effectue l'étape e) à une pression comprise entre 0,1 et 20°bars.

Selon l'invention, avant l'étape a), on peut effectuer une étape de refroidissement de la solution liquide.

La phase non miscible avec l'eau peut être choisie parmi le groupe suivant: les solvants hydrocarbonés, les solvants de type silicone, les solvants halogénés ou perhalogénés, et leurs mélanges.

La solution liquide peut comporter, en outre, au moins un composé amphiphile non ionique, anionique, cationique, ou zwittérionique, ayant au moins la propriété anti-agglomération des hydrates.

La solution liquide peut comporter, en outre, au moins un composé promoteur d'hydrate choisi parmi le tétrahydrofurane et les composés ayant pour formule générale (I): 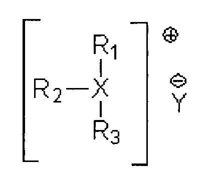
o avec X= S, N-R₄ ou P-R₄,
o Y est un anion choisi parmi le groupe constitué par un hydroxyle, un sulfate ou un halogène,
o R₁, R₂, R₃, R₄ sont identiques ou différents et choisis parmi le groupe constitué des radicaux alkyles en C1-C5 linéaires ou ramifiés.

De préférence, la solution liquide peut comporter du tétrahydrofurane et un composé promoteur d'hydrates ayant pour formule générale (I)

Le gaz peut être une fumée de combustion et les composés acides peuvent comporter le CO2.

Alternativement, le gaz peut être choisi parmi un gaz naturel, un gaz obtenu en queue du procédé Claus, un gaz de synthèse, un gaz de conversion, un gaz issus de la fermentation de biomasse et les composés acides peuvent comporter au moins l'un des éléments suivants : CO2 et H2S.

D'autres caractéristiques et avantages de l'invention seront mieux compris et apparaîtront clairement à la lecture de la description faite ci-après en se référant aux dessins parmi lesquels :
- la figure 1 décrit un mode de réalisation préféré du procédé selon l'invention,
- les figures 2 et 3 décrivent deux autres modes de réalisation du procédé selon l'invention.

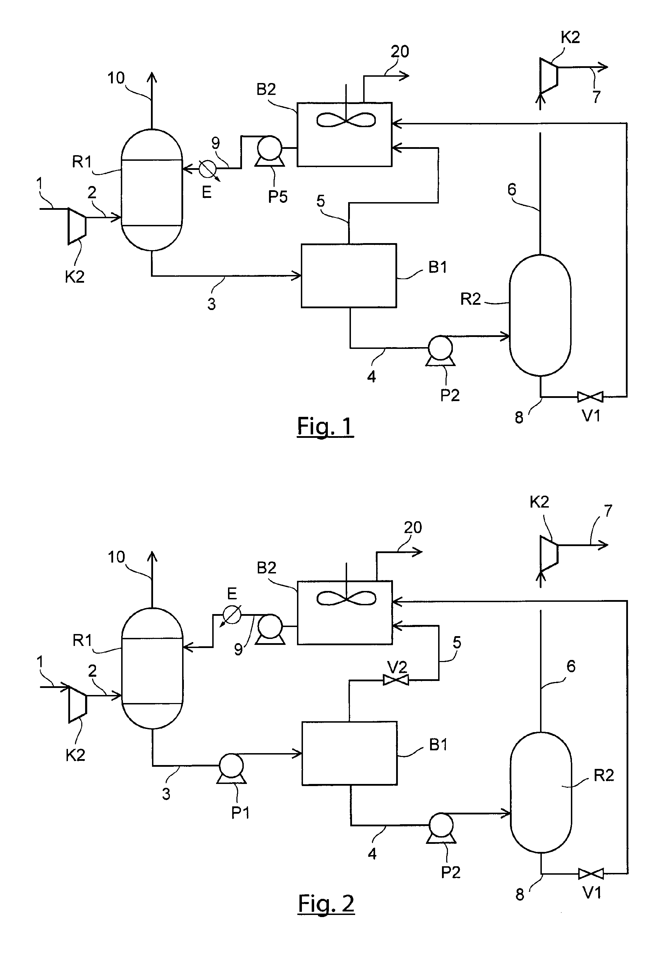

Le procédé de désacidification selon l'invention peut être appliqué à différentes charges gazeuses. Sur la figure 1, la charge gazeuse arrive par le conduit 1. Par exemple, le procédé permet de décarbonater des fumées de combustion, de retirer les composés acides du gaz naturel ou d'un gaz obtenu en queue du procédé Claus. Le procédé permet également de retirer les composés acides contenus dans les gaz de synthèse, dans les gaz de conversion, dans les gaz de centrales intégrées de combustion du charbon ou du gaz naturel, et dans les gaz issus de la fermentation de biomasse. Par "composés acides", on entend au sens de la présente invention du CO2 et/ou de l'H2S.

De préférence, l'invention peut être appliquée au captage du CO2 contenu dans des fumées de combustion. Dans ce cas, le gaz à traiter arrivant par le conduit 1 est une fumée de combustion comportant du CO2, par exemple dans une teneur comprise entre 5% et 30% volumique. Les fumées de combustion peuvent être produites par une centrale thermique pour la production d'électricité. Le procédé de captage selon l'invention peut également être appliqué à toutes les fumées de combustion, produites par exemple dans une raffinerie, dans une cimenterie, dans une installation de sidérurgie.

Les fumées de combustion contiennent de l'azote et du CO2, de l'oxygène et de la vapeur d'eau ainsi que des traces de NOx et SOx. La concentration volumique de CO2 est typiquement dans la gamme de 3 - 15%, la concentration volumique d'H2O peut être dans la gamme de 1 - 15%, et la concentration volumique cumulée d'azote et d'oxygène peut être entre 50 et 95%. La pression des fumées de combustion peut être proche de la pression atmosphérique et à une température comprise entre 100°C et 250°C.

Les fumées de combustion produites par un haut fourneau sont plus riches en CO2, dans une teneur généralement comprise entre 20% et 30% volumique et à plus haute pression, généralement comprise entre 2 et 4 bara. Ces fumées peuvent également contenir du CO dans des proportions variant entre 15% et 50% volumique.

En référence à la figure 1, Le gaz arrivant par le conduit 1 est éventuellement comprimé par le compresseur K2 puis introduit dans le contacteur R1 par le conduit 2. Dans le contacteur R1, on met en contact le gaz avec une solution liquide arrivant par le conduit 9. La solution liquide comporte un mélange d'au moins deux phases liquides non miscibles, dont l'une est constituée d'eau. La solution liquide peut comporter en outre un composé amphiphile. La composition de la solution liquide est décrite plus en détail ci-après. Dans R1, le gaz et la solution liquide sont mis en contact dans des conditions de pression et de température compatibles avec la formation d'hydrates de composés acides, c'est-à-dire de molécules de composés acides emprisonnées dans des cages constituées de molécules d'eau. Dans l'application du procédé à une fumée de combustion, on forme des hydrates de CO2. Par exemple, la mise en contact du gaz avec la solution liquide est réalisée dans R1 à une température comprise entre -5°C et 20°C, de préférence entre -5°C et 15°C, voire entre 0°C et 10°C, et à une pression comprise entre 0,1 et 20 bars, de préférence entre 1 et 20 bars voir entre 1 et 10 bars. Dans la présente description, les pressions sont exprimées en valeurs absolues. La formation d'hydrates peut être favorisée en ajoutant dans la solution liquide des composés promoteurs d'hydrates. Les particules d'hydrates de composés acides sont dispersées dans la phase liquide non miscible à l'eau et transportées sous forme d'une suspension de solides dans cette phase. Dans R1, le gaz non transformé en hydrate est appauvri en composés acides. Il est évacué de R1 par le conduit 10.

Le coulis d'hydrates formé par les hydrates dispersés dans la phase non miscible à l'eau est évacué du contacteur R1 par le conduit 3 pour être introduit dans le dispositif séparateur B1. La pression dans B1 peut être comprise entre 0,1 et 20 bars, de préférence entre 1 et 20 bars. De plus, la pression peut être environ égale à la pression dans R1. De préférence, la pression dans B1 est maintenue à une valeur inférieure à la pression dans R1 pour assurer l'écoulement du coulis d'hydrates de R1 dans B1. Par exemple la pression dans B1 est égale à la pression dans R1 réduite d'une valeur de 0,1 à 2 bars. Alternativement à la baisse de pression dans B1 par rapport à la pression dans R1, ou en plus de la baisse de pression dans B1 par rapport à la pression dans R1, on peut utiliser une pompe installée sur le conduit 3 pour assurer l'écoulement du coulis d'hydrates de R1 dans B1. De préférence, le coulis est maintenu dans B1 à une température inférieure à la température de dissociation des hydrates formés, en considérant la pression régnant dans B1. Par exemple, la température est comprise entre -5°C et 20°C.

Dans le dispositif B1, on divise le coulis d'hydrates en deux fractions : une fraction enrichie en hydrates et pauvre en liquide non miscible à l'eau et une fraction enrichie en liquide non miscible à l'eau et pauvre en hydrates. Pour effectuer la division, on peut utiliser toute technique adaptée à la séparation de solide et de liquide, notamment par décantation, par filtration, par centrifugation, par crémage. De préférence, on utilise les techniques de décantation et de crémage pour limiter la consommation énergétique du procédé selon l'invention. Puis les deux fractions sont séparées pour être envoyées respectivement dans le réacteur R2 et l'appareil mélangeur B2. En effet, la fraction enrichie en hydrates et pauvre en liquide non miscible à l'eau est envoyée par le conduit 4 et la pompe P2 dans le réacteur R2 pour effectuer une dissociation des hydrates. La fraction enrichie en liquide non miscible à l'eau et pauvre en hydrates est envoyée par le conduit 5 dans l'appareil mélangeur B2. L'écoulement de la fraction enrichie en liquide non miscible à l'eau et pauvre en hydrates de B1 dans B2 peut être assuré par une différence de pression entre B1 et B2 et/ou en mettant en oeuvre une pompe sur le conduit 5.

La pompe P2 permet d'envoyer la fraction enrichie en hydrates de B1 dans R2 et, de plus, permet d'augmenter la pression de cette fraction jusqu'à une pression comprise entre 5 et 70 bars, de préférence entre 30 et 70 bars. Dans R2, on chauffe la fraction enrichie en hydrates sous pression entre 5 et 70 bars, de préférence entre 30 et 70 bars pour provoquer la dissociation des hydrates en libérant du CO2 sous forme gazeuse et une phase aqueuse liquide. On peut chauffer la fraction enrichie en hydrates jusqu'à une température comprise entre -5°C et 30°C, de préférence entre 15 et 30°C, voire entre 20°C et 30°C. De préférence, les conditions de pression et température dans le réacteur R2 sont inférieurs aux conditions de pression et de température du point de rosé du CO2 pour éviter la formation de CO2 liquide dans R2. Par exemple, le chauffage est effectué par une résistance chauffante qui chauffe directement la fraction enrichie en hydrates ou les parois du réacteur R2. Le chauffage dans R2 peut également être réalisé par un échangeur de chaleur avec un fluide caloporteur. La fraction enrichie en hydrates peut également être chauffée dans le conduit 4 alimentant R2 afin d'améliorer l'efficacité du procédé et réserver R2 à la séparation entre le gaz et le liquide. Le CO2 gazeux est évacué de R2 par le conduit 6. Il peut être comprimé par le compresseur K2 et évacué par le conduit 7 pour être stocké ou séquestré dans un réservoir. L'effluent liquide restant dans R2 est essentiellement composé d'eau. Ce liquide est évacué de R2 par le conduit 8 et détendu dans l'organe de détente V1, par exemple une vanne ou une turbine, pour être introduit dans l'appareil mélangeur B2. La détente est effectuée jusqu'à une pression proche de la pression du réacteur R1, par exemple à une pression comprise entre 1 et 20 bars. On peut mettre en oeuvre un ballon flash disposé sur le conduit 8 pour séparer le CO2 libéré sous forme gazeuse lors de la détente.

L'appareil mélangeur B2 permet de mélanger la fraction enrichie en liquide non miscible à l'eau et pauvre en hydrates provenant de B1 par le conduit 5 avec l'effluent liquide provenant de R2 par le conduit 8. Par exemple l'appareil B2 est une enceinte munie d'un mélangeur rotatif à pâles. L'appareil B2 peut également comporter des restrictions au niveau des arrivées des conduits 5 et 8 qui permettent de projeter les fluides arrivant par ces deux conduits à concourant pour effectuer le mélange. B2 peut comporter un conduit 20 d'évacuation de gaz, par exemple le CO2, qui pourrait éventuellement être libéré dans B2. La pression dans B2 peut être à une valeur proche de la pression du réacteur R1, par exemple à une pression comprise entre 0,1 et 20 bars, de préférence entre 1 et 20 bars. Le mélange obtenu dans B2 est pompé par la pompe P5, refroidi dans l'échangeur E jusqu'à la température de fonctionnement de R1, par exemple jusqu'à une température comprise entre -10°C et 20°C de préférence entre -5°C et 10°C, et introduit dans le contacteur R1 par le conduit 9 à la pression de fonctionnement de R1.

Le procédé schématisé par la figure 1 peut être mis en oeuvre en utilisant plusieurs dispositifs séparateurs B1 fonctionnant en parallèle, et éventuellement des capacités des stockages qui permettent de stocker des quantités de fractions obtenues en sortie du dispositif B1, afin de pouvoir faire fonctionner le procédé en continu.

La figure 2 représente une variante du procédé décrit en référence à la figure 1 dans lequel on effectue la séparation du coulis d'hydrates à haute pression. Les références de la figure 2 identiques aux références de la figure 1 désignent les mêmes éléments.

En référence à la figure 2, le gaz arrivant par le conduit 1 éventuellement comprimé par le compresseur K2 est introduit dans le contacteur R1 par le conduit 2. Dans le contacteur R1, on met en contact le gaz avec la solution liquide arrivant par le conduit 9.

Par exemple, la mise en contact du gaz avec la solution liquide est réalisée dans R1 à une température comprise entre -5°C et 20°C, de préférence entre -5°C et 15°C, voire entre 0°C et 10°C, et à une pression comprise entre 0,1 et 20 bars, de préférence entre 1 et 20 bars, voire entre 1 et 10 bars.

Le gaz non transformé en hydrate dans R1 est appauvri en composés acides et est évacué de R1 par le conduit 10. Le coulis d'hydrates formé par les hydrates dispersés dans la phase non miscible à l'eau est évacué du contacteur R1 par le conduit 3 et pompé par la pompe P1 pour être introduit dans le dispositif séparateur B1.

La pompe P1 permet d'augmenter la pression du coulis d'hydrates à une pression comprise entre 5 et 70 bars, de préférence entre 30 et 70 bars.

Dans le dispositif B1, on divise le coulis d'hydrates en deux fractions : une fraction enrichie en hydrates et pauvre en liquide non miscible à l'eau et une fraction enrichie en liquide non miscible à l'eau et pauvre en hydrates. Dans le procédé schématisé par la figure 2, B1 peut fonctionner à une pression comprise entre 5 et 70 bars, de préférence entre 30 et 70 bars et à une température inférieure à la température de dissociation des hydrates, en considérant la pression régnant dans B1. La fraction enrichie en hydrates et pauvre en liquide non miscible à l'eau est envoyée par le conduit 4 et éventuellement la pompe P2 dans le réacteur R2 pour effectuer une dissociation des hydrates. La fraction enrichie en liquide non miscible à l'eau et pauvre en hydrates est détendue par l'organe de détente V2, par exemple une vanne ou une turbine, et envoyée par le conduit 5 dans l'appareil mélangeur B2. V2 permet d'effectuer une détente jusqu'à une pression proche de la pression de fonctionnement de R1, par exemple à une pression comprise entre 0,1 et 20 bars, de préférence entre 1 et 20 bars. On peut mettre en oeuvre un ballon flash disposé sur le conduit 5 pour séparer le CO2 libéré sous forme gazeuse lors de la détente.

Dans R2, on chauffe la fraction enrichie en hydrates pour provoquer la dissociation des hydrates en libérant du CO2 sous forme gazeuse et une phase aqueuse. La pression dans R2 peut être comprise entre 5 et 70 bars, de préférence entre 30 et 70 bars. On peut chauffer la fraction enrichie en hydrates jusqu'à une température comprise entre -5°C et 30°C, de préférence entre 15 et 30°C, voire entre 20°C et 30°C. Le CO2 gazeux est évacué de R2 par le conduit 6. Il peut être comprimé par le compresseur K2 et évacué par le conduit 7 pour être stocké ou séquestré dans un réservoir. L'effluent liquide restant dans R2 est évacué par le conduit 8 et détendu dans l'organe de détente V1 pour être introduit dans l'appareil mélangeur B2. La détente est effectuée jusqu'à une pression proche de la pression du réacteur R1, par exemple à une pression comprise entre 0,1 et 20 bars, de préférence entre 1 et 20 bars. On peut mettre en oeuvre un ballon flash disposé sur le conduit 8 pour séparer le CO2 libéré sous forme gazeuse lors de la détente.

L'appareil mélangeur B2 permet de mélanger la fraction enrichie en liquide non miscible à l'eau et pauvre en hydrates provenant de B1 par le conduit 5 avec l'effluent liquide provenant de R2 par le conduit 8. B2 peut comporter un conduit 20 d'évacuation de gaz, par exemple le CO2, qui pourrait éventuellement être libéré dans B2. La pression dans B2 peut être à une valeur proche de la pression du réacteur R1, par exemple à une pression comprise entre 0,1 et 20 bars, de préférence entre 1 et 20 bars. Le mélange obtenu dans B2 est pompé par la pompe P5, refroidi dans l'échangeur E jusqu'à la température de fonctionnement de R1, par exemple jusqu'à une température comprise entre -10°C et 20°C de préférence entre -5°C et 10°C, et introduit dans le contacteur R1 par le conduit 9 à la pression de fonctionnement de R1.

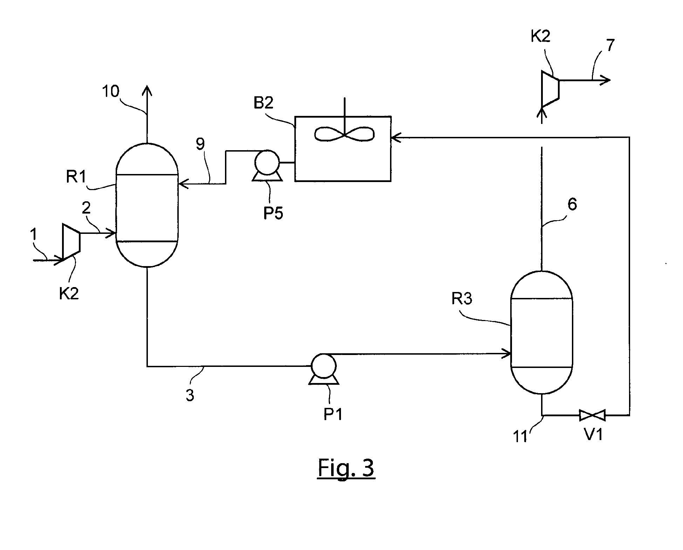

La figure 3 représente une variante du procédé décrit en référence à la figure 2 dans lequel on effectue la séparation du coulis d'hydrates en deux fractions et la dissociation des hydrates dans le même dispositif. Les références de la figure 3 identiques aux références de la figure 2 désignent les mêmes éléments.

En référence à la figure 3, le gaz arrivant par le conduit 1 éventuellement comprimé par le compresseur K2 est introduit dans le contacteur R1 par le conduit 2. Dans le contacteur R1, on met en contact le gaz avec la solution liquide arrivant par le conduit 9.

Par exemple, la mise en contact du gaz avec la solution liquide est réalisée dans R1 à une température comprise entre -5°C et 20°C de préférence entre -5°C et 15°C, voire entre 0°C et 10°C, et à une pression comprise entre 0,1 et 20 bars, de préférence entre 1 et 20 bars, voire entre 1 et 10 bars.

Le gaz non transformé en hydrate dans R1 est appauvri en composés acides et est évacué de R1 par le conduit 10. Le coulis d'hydrates formé par les hydrates dispersés dans la phase non miscible à l'eau est évacué du contacteur R1 par le conduit 3 et pompé par la pompe P1 pour être introduit dans le dispositif R3.

La pompe P1 permet d'augmenter la pression du coulis d'hydrates à une pression comprise entre 5 et 70 bars, de préférence entre 30 et 70 bars.

Selon l'invention, dans le dispositif R3, on effectue successivement les étapes de division du coulis en deux fraction, de séparation des deux fractions et de dissociation des hydrates. Dans un premier temps, dans le dispositif R3, on divise le coulis d'hydrates en deux fractions : une fraction enrichie en hydrates et pauvre en liquide non miscible à l'eau et une fraction enrichie en liquide non miscible à l'eau et pauvre en hydrates. Pour cela on peut utiliser les mêmes techniques de séparation que celles décrites pour le dispositif B1 de la figure 1. Puis, dans un deuxième temps, on sépare les deux fractions en évacuant de R3 la fraction enrichie en liquide non miscible à l'eau par le conduit 11 et par l'organe de détente V1 pour l'introduire dans l'appareil mélangeur B2. La fraction enrichie en hydrates et pauvre en liquide non miscible à l'eau reste dans le dispositif R3. Puis, dans un troisième temps, on chauffe la fraction enrichie en hydrates dans le dispositif R3 jusqu'à une température comprise entre -5°C et 30°C, de préférence entre 15°C et 30°C, voire entre 20°C et 30°C pour provoquer la dissociation des hydrates en libérant des composés acides sous forme gazeuse et une phase aqueuse. Les étapes de séparations et de dissociation des hydrates peuvent être réalisées dans R3 entre 5 et 70 bars, de préférence entre 30 et 70 bars. Les composés acides gazeux sont évacués de R3 par le conduit 6. Ils peuvent être comprimés par le compresseur K2 et évacué par le conduit 7 pour être stocké ou séquestré dans un réservoir. L'effluent liquide restant dans R3 est évacué de R3 par le conduit 11 et l'organe de détente V1 pour être introduit dans l'appareil mélangeur B2 qui contient déjà la fraction enrichie en liquide non miscible à l'eau. Le procédé schématisé par la figure 3 peut être mis en oeuvre en utilisant plusieurs dispositifs R3 fonctionnant en parallèle, et éventuellement des capacités des stockages qui permettent de stocker des quantités de fractions obtenues en sortie des dispositifs R3, afin de pouvoir faire fonctionner le procédé en continu.

Dans l'appareil mélangeur B2, on mélange la fraction enrichie en liquide non miscible à l'eau et pauvre en hydrates avec l'effluent liquide. La pression dans B2 peut être à une valeur proche de la pression du réacteur R1, par exemple à une pression comprise entre 0,1 et 20 bars, de préférence entre 1 et 20 bars. Le mélange obtenu dans B2 est pompé par la pompe P5, refroidi dans l'échangeur E jusqu'à la température de fonctionnement de R1, par exemple jusqu'à une température comprise entre -10°C et 20°C, de préférence entre -5°C et 10°C, et introduit dans le contacteur R1 par le conduit 9.

La solution liquide mise en oeuvre dans le procédé selon l'invention est composée d'un mélange d'eau et d'une phase, également nommée solvant, non miscible à l'eau. A ce mélange, on peut ajouter au moins un composé amphiphile qui présente la propriété de stabiliser le mélange eau/solvant non miscible à l'eau sous forme d'une émulsion. On peut également ajouter des promoteurs d'hydrates dans la solution liquide.

Le solvant contenu dans la solution liquide mise en oeuvre dans le procédé selon l'invention peut être choisi parmi plusieurs familles : les solvants hydrocarbonés, les solvants de type silicone, les solvants halogénés ou perhalogénés.

Dans le cas des solvants hydrocarbonés, le solvant peut être choisi parmi le groupe constitué par :
- des esthers méthyliques de colza
- des coupes aliphatiques, par exemple des coupes isoparaffiniques ayant un point éclair suffisamment élevé pour être compatibles avec le procédé selon l'invention,
- des solvants organiques de type coupes aromatiques ou coupes naphténiques peuvent également être utilisées avec les mêmes conditions de point éclair,
- des produits purs ou en mélanges choisis parmi les alcanes ramifiés, les cycloalcanes et alkylcycloalcanes, les composés aromatiques, alkylaromatiques.

Le solvant hydrocarboné pour la mise en oeuvre du procédé selon l'invention est **caractérisé en ce que** son point éclair est supérieur à 40°C, et de préférence supérieur à 75°C et plus précisément supérieur à 100°C. Son point de cristallisation est inférieur à -5°C.

Les solvants de type silicone, seuls ou en mélanges, sont choisis par exemple parmi le groupe constitué par :
- les polydiméthylsiloxane (PDMS) linéaires du type (CH₃)₃-SiO-[(CH₃)₂-SiO]ₙ-Si(CH₃)₃ avec n compris entre 1 et 900, correspondant à des viscosités à température ambiante comprises entre 0,1 et 10000 mPa.s,
- les polydiéthylsiloxanes ayant une viscosité à température ambiante comprise entre 0,1 et 10000 mPa.s,
- les polydiméthylsiloxanes cycliques D₄ à D₁₀ et préférentiellement de D₅ à D₈. Le motif D représente l'unité monomère diméthylsiloxane,
- les poly(trifluoropropyl méthyl siloxane).

Les solvants halogénés ou perhalogénés pour le procédé sont choisis parmi les perfluorocarbures (PFC), les hydrofluoroéthers (HFE), les perfluoropolyéthers (PFPE).

Le solvant halogéné ou perhalogéné utilisé pour la mise en oeuvre du procédé selon l'invention est **caractérisé en ce que** son point d'ébullition est supérieur ou égal à 70°C à pression atmosphérique et que sa viscosité est inférieure à 1 Pa.s à température ambiante et à la pression atmosphérique.

Les proportions eau/solvant de la solution liquide peuvent être comprises respectivement entre 0,5/99,5 à 60/40% en volume, et de préférence entre 10/90 et 50/50%, et plus précisément entre 20/80 et 35/65% en volume par rapport au volume total de la composition.

Les composés amphiphiles qui peuvent entrer dans la composition de la solution liquide mise en oeuvre dans le procédé selon l'invention sont des composés chimiques (monomère ou polymère) ayant au moins un groupement chimique hydrophile ou polaire, présentant une forte affinité avec la phase aqueuse et au moins un groupement chimique présentant une forte affinité avec le solvant (communément désigné comme hydrophobe). Ils présentent la propriété de stabiliser le mélange eau/solvant non miscible à l'eau sous forme éventuellement d'une émulsion et de disperser les particules d'hydrate dans la phase non miscible à l'eau.

Les composés amphiphiles comportent une partie hydrophile qui peut être soit neutre, soit anionique, soit cationique, soit encore zwittérionique. La partie présentant une forte affinité avec le solvant (désignée comme hydrophobe) peut être soit hydrocarbonée, soit siliconée ou fluoro-siliconée, soit encore halogénée ou perhalogénée.

Les composés amphiphiles hydrocarbonés utilisés seuls, ou en mélanges, sont choisis parmi le groupe formé par les composés amphiphiles non ioniques, anioniques, cationiques ou zwittérioniques.

Les composés non ioniques sont **caractérisés en ce qu'**ils contiennent:
- une partie hydrophile comprenant soit des groupements oxyde d'alkylène, hydroxy ou encore des groupements amino alkylène,
- une partie hydrophobe comprenant une chaîne hydrocarbonée dérivée d'un alcool, d'un acide gras, d'un dérivé alkylé d'un phénol ou une polyoléfine, par exemple dérivée de l'isobutène ou du butène.

La liaison entre la partie hydrophile et la partie hydrophobe peut, par exemple être une fonction éther, ester ou amide. Cette liaison peut également être obtenue par un atome d'azote ou de soufre. Parmi les composés hydrocarbonés amphiphiles non ioniques, on peut mentionner les alcools gras oxyéthylés, les alkylphénol alkoxylés, les dérivés oxyéthylés et/ou oxypropylés, les éthers de sucre, les esters de polyol, tels que glycérol, polyéthylène glycol, sorbitol et sorbitan, les mono et diéthanol amides, les amides d'acides carboxyliques, les acides sulfoniques ou les acides aminés.

Les composés hydrocarbonés amphiphiles anioniques sont **caractérisés en ce qu'**ils contiennent un ou plusieurs groupements fonctionnels ionisables dans la phase aqueuse pour former des ions chargés négativement. Ces groupements anioniques apportent l'activité de surface de la molécule. Un tel groupement fonctionnel est un groupement acide ionisé par un métal ou une amine. L'acide peut par exemple être un acide carboxylique, sulfonique, sulfurique, ou phosphorique. Parmi les composés hydrocarbonés amphiphiles anioniques, on peut mentionner:
- les carboxylates tels que les savons métalliques, les savons alkalins, ou les savons organiques (tels que les N-acyl aminoacides, N-acyl sarcosinates, N-acyl glutamates et N-acyl polypeptides),
- les sulfonates tels que les alkylbenzènesulfonate (c'est à dire les alkylbenzenesulfonate alkoxylés) les paraffines et oléfines sulfonates, les ligosulfonate ou les dérivés sulfonsucciniques (tels que les sulfosuccinates, hémisulfosuccinates, dialkylsulfosuccinates, par exemple le dioctylsulfosuccinate de sodium).
- les sulfates tels que les alkylsulfates, les alkyléthersulfates et les phosphates.

Les composés hydrocarbonés amphiphile cationiques sont **caractérisés en ce qu'**ils contiennent un ou plusieurs groupements fonctionnels ionisables dans la phase aqueuse pour former des ions chargés positivement. Parmi les composés hydrocarbonés cationiques, on peut mentionner :
- les sels d'alkylamine choisis parmi le groupe constitué par les alkylamine éthers, les dérivés d'alkyle diméthyle benzyle ammonium et les dérivés d'alkyle amine alcoxylés,
- les dérivés hétérocycliques tels que les dérivés pyridinium, imidazolium, quinolinium, pipéridinium ou morpholinuim.

Les composés hydrocarbonés zwittérioniques se **caractérisent en ce qu'**ils possèdent au moins deux groupements ionisables, tels que l'un au moins est chargé positivement et l'un au moins est chargé négativement. Les groupements étant choisis parmi les groupements anioniques et cationiques décrits précédemment, tels que par exemple les bétaïnes, les dérivés alkyl amido bétaïnes, des sulfobétaïne, des phosphobétaïnes ou encore des carboxybétaïnes.

Les composés amphiphiles, comportant une partie hydrophile neutre, anionique, cationique, ou zwittérionique, peuvent également avoir une partie hydrophobe (définie comme présentant une forte affinité avec le solvant non miscible à l'eau) siliconée ou fluoro-siliconée. Ces composés amphiphiles siliconés, oligomères ou polymères, peuvent également être utilisés pour les mélanges eau/solvant organique ou eau/solvant halogéné ou perhalogéné ou encore eau/solvant siliconé.

Les composés amphiphiles siliconés neutres peuvent être des oligomères ou des copolymères de type PDMS dans lesquels les groupements méthyles sont partiellement remplacés par des groupements polyoxyde d'alkylène (de type polyoxyde d'éthylène, polyoxyde de propylène ou d'un polymère mélange polyoxyde d'éthylène et de propylène) ou pyrrolidone tels que les dérivés PDMS/hydroxy-alkylène oxypropyl-méthyle siloxane ou encore des dérivés alkyl méthyle siloxane/hydroxy-alkylène oxypropyl-méthyle siloxane.

Ces copolyols obtenus par réaction d'hydrosilylation possèdent des groupements hydroxyles finaux réactifs. Ils peuvent donc être utilisés pour réaliser des groupements ester, par exemple par réaction d'un acide gras, ou encore des groupements alkanolamides, ou encore des groupements glycosides.

Des polymères siliconés comportant des groupements alkyls latéraux (hydrophobes) directement liés à l'atome de silicium peuvent également être modifiés par réaction avec des molécules de type fluoro alcools (hydrophiles) pour former des composés amphiphiles.

Les propriétés tensioactives sont ajustées avec le rapport groupement hydrophile/groupement hydrophobe.

Les copolymères PDMS peuvent également être rendus amphiphiles par des groupements anioniques tels que des groupements phosphate, carboxylate, sulfate ou encore sulfosuccinate. Ces polymères sont généralement obtenus par réaction d'acides sur les fonctions hydroxydes finales de chaînes latérales de polyoxyde d'alkynlène de polysiloxane.

Les copolymères PDMS peuvent également être rendus amphiphiles par des groupements cationiques tels que des groupements ammonium quaternaire, des groupements alkylamido amine quaternisée, ou des groupements alkyle alcoxy amine quaternisée ou encore une imidazoline amine quaternisée. On peut utiliser, par exemple le copolymère PDMS/chlorure de benzyle tri-méthyl ammonium méthylsiloxane ou encore les dérivés halogéno N-Alkyl-N,Ndiméthyl-(3-siloxanylpropyl)ammonium.

Les copolymères PDMS peuvent également être rendus amphiphiles par des groupements de type bétaïne tel que une carboxybétaïne, une alkyl amido bétaïne, une phosphobétaïne ou encore une sulfobétaïne. Dans ce cas, les copolymères comprendront une chaîne siloxane hydrophobe et par exemple une partie organobétaïne hydrophile de formule générale:

(Me₃SiO)(SiMe₂O)ₐ(SiMeRO)SiMe₃

Avec R = (CH₂)₃⁺NMe₂(CH₂)_{b}COO⁻; a= 0,10 ; b= 1,2

Les composés amphiphiles, comportant une partie hydrophile neutre, anionique, cationique, ou zwittérionique, peuvent aussi avoir une partie hydrophobe (définie comme présentant une forte affinité avec le solvant non miscible à l'eau) halogénée ou perhalogénée. Ces composés amphiphiles halogénés, oligomères ou polymères, peuvent également être utilisés pour les mélanges eau/solvant organique ou eau/solvant halogéné ou perhalogéné ou encore eau/solvant siliconé.

Les composés amphiphiles halogénés tels que par exemple les composés fluorés peuvent être ioniques ou non ioniques. En particulier, on peut citer :
- les composés halogénés ou perhalogénés amphiphiles non ioniques tels que les composés répondant à la formule générale Rf(CH₂)(OC₂H₄)ₙOH, dans laquelle Rf est une chaîne perfluorocarbonée ou fluorocarbonée partiellement hydrogénée dans lesquels n est un nombre entier au moins égal à 1, les agents tensioactifs non ioniques fluorés de type polyoxyéthylène-fluoroalkyléther,
- les composés amphiphiles ionisables pour former de composés anioniques, tels que les acides perfluorocarboxyliques, et leurs sels, ou les acides perfluorosulphoniques et leurs sels, les composés perfluorophosphates, les acides mono et dicarboxyliques dérivant des perfluoro polyéthers, et leurs sels, les acides mono et disulfoniques dérivant des perfluoro polyéthers, et leurs sels, les composés amphiphiles perfluoro polyéther phosphates et les composés amphiphiles perfluoro polyéther diphosphates,
- les composés halogénés amphiphiles cationiques ou anioniques perfluorés ou ceux dérivants des perfluoro polyéthers ayant 1, 2 ou 3 chaînes hydrophobes latérales, les fluoroalcools éthoxylés, les sulfonamides fluorées ou les carboxamides fluorées.

Le composé amphiphile est ajouté à la solution liquide d'eau/solvant dans une proportion comprise entre 0,1 et 10% en poids, et de préférence entre 0,1 et 5% en poids, par rapport à la phase non miscible dans la phase aqueuse, c'est-à-dire le solvant.

Par composés "promoteur d'hydrates", on entend au sens de la présente invention tout composé chimique qui présente la propriété d'abaisser la pression de formation des hydrates et/ou de modifier la cinétique de formation des hydrates.

Les composés promoteurs d'hydrates selon l'invention peuvent être choisis parmi le tétrahydrofurane (THF) et les composés de formule générale (I) : 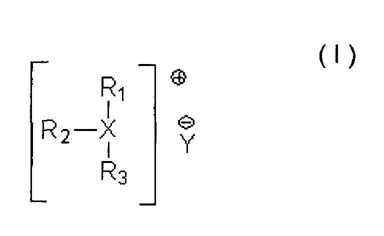
- avec X= S, N-R₄ ou P-R₄,
- Y est un anion choisi parmi le groupe constitué par un hydroxyle, un sulfate ou un halogène. L'halogène est choisi parmi le groupe constitué par le brome, le fluor, le chlore et l'iode,
- R₁, R₂, R₃, R₄ sont identiques ou différents et choisis parmi le groupe constitué des radicaux alkyles en C1-C5 linéaires ou ramifiés. Par alkyle linéaire ou ramifié ayant 1 à 5 atomes de carbone, on entend en particulier les radicaux méthyle, éthyle, propyle, isopropyle, butyle, isobutyle, sec-butyle, tert-butyle et pentyle.

De préférence, pour améliorer les performances des promoteurs d'hydrates, on utilise une association de promoteurs d'hydrates comportant du tétrahydrofurane (THF) et au moins un composé de formule générale (I).

Parmi les promoteurs de formule (I), les alkyles d'ammonium et les alkyles phosphonium sont les préférés.

De préférence, le promoteur de formule (I) est choisi parmi le groupe constitué par le bromure de tétraéthylammonium (TEAB), le bromure de tétrapropylammonium (TPAB), le sulfate hydrogène de tétrabutylammonium (TBAHS), l'hydrate de chlorure de tétrabutylammonium (TBACI), l'iodure de tétrabutylammonium (TBAI), l'hydroxide de tétrabutylammonium (TBAOH), l'hydrate de fluorure de tétrabutylammonium (TBAF), le bromure de tétrabutylammonium (TBAB), le bromure de tétrabutylphosphonium (TBPB), le bromure de tetraisoamyl ammonium (TiAAB).

En particulier, parmi les composés de formule (I), on peut choisir un composé dans le sous-groupe de promoteurs répondant à la formule (II) suivante dans laquelle : 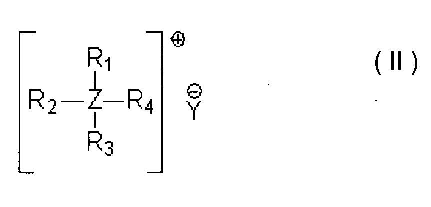
- Z=NouP,
- Y est un anion choisi parmi le groupe constitué par un hydroxyle, un sulfate ou un halogène. L'halogène est choisi parmi le groupe constitué par le brome, le fluor, le chlore et l'iode,
- R₁= R₂= R₃=R₄=butyle.

De manière préférée, le promoteur de formule (II) est choisi parmi le groupe constitué par le bromure de tétrabutylammonium (TBAB), l'hydrate de fluorure de tétrabutylammonium (TBAF) et le bromure de tétrabutylphosphonium (TBPB).

La solution liquide selon l'invention peut comporter une quantité de promoteur d'hydrates comprise entre 1 et 30%, de préférence entre 1 et 20% molaire par rapport à la phase aqueuse dans la solution liquide.

Dans le cas où on met en oeuvre une association d'au moins deux promoteurs d'hydrates, le tétrahydrofurane est ajouté à la solution liquide dans une proportion comprise entre 1% et 15 % molaire par rapport à la phase aqueuse et de préférence entre 3% et 12% molaire par rapport à la phase aqueuse et de manière encore plus préférée entre 6% et 9% molaire par rapport à la phase aqueuse de la solution liquide et e promoteur de formule (I) ou le promoteur de formule (II) est ajouté à la solution liquide dans une proportion comprise entre 1 et 20 % massique par rapport à la phase aqueuse, et de préférence entre 5 et 15 % massique par rapport à la phase aqueuse et de manière encore plus préférée entre 7 et 12% massique par rapport à la phase aqueuse de la solution liquide.

L'exemple ci-après permet d'illustrer la réalisation de l'étape de division du coulis d'hydrates en deux fractions.

Une suspension contenant 20% de particule d'hydrates est dans un réacteur maintenu à une pression de l'ordre de 3 bars et à une température de 3°C sous agitation. La suspension présente un caractère homogène. Lorsque l'agitation est arrêtée après un temps de 10 secondes les particules ont sédimentées dans le bas du réacteur et le solvant non miscible est clair car exempt de particules d'hydrates.

## Revendications

1. Procédé de captage de composés acides contenus dans un gaz, dans lequel on effectue les étapes suivantes :
a) on met en contact (R1) le gaz (2) avec une solution liquide (9) comportant un mélange d'une phase aqueuse et d'une phase non miscible avec l'eau pour produire une solution (3) comportant des hydrates de composés acides et un gaz appauvri en composés acides (10),
b) on divise (B1) la solution comportant des hydrates de composés acides en une fraction riche en hydrates et une fraction riche en phase non miscible avec l'eau,
c) on sépare (B1) la fraction riche en hydrates (4) de la fraction riche en phase non miscible avec l'eau (5),
d) on chauffe (R2) la fraction riche en hydrates pour libérer des composés acides gazeux (6) en dissociant les hydrates et pour produire une fraction riche en eau (8),
e) on mélange (B2) la fraction riche en phase non miscible obtenue à l'étape c) avec la fraction riche en eau produite à l'étape d) pour produire la solution liquide mise en oeuvre à l'étape a).

2. Procédé selon la revendication 1, dans lequel on effectue les étapes b) et c) dans un appareil de séparation et on effectue l'étape d) dans un réacteur.

3. Procédé selon la revendication 1, dans lequel on effectue successivement les étapes b), c) et d) dans le même dispositif.

4. Procédé selon l'une des revendications précédentes, dans lequel:
- on effectue l'étape a) à une pression comprise entre 0,1 et 20 bars et à une température comprise entre -5°C et 20°C
- on effectue les étapes b) et c) à une pression comprise entre 0,1 et 20 bars,
- on effectue l'étape d) à une pression comprise entre 5 et 70 bars et à une température comprise entre -5°C et 30°C,
- on effectue l'étape e) à une pression comprise entre 0,1 et 20 bars.

5. Procédé selon l'une des revendications 1 à 3, dans lequel :
- on effectue l'étape a) à une pression comprise entre 0,1 et 20 bars et à une température comprise entre -5°C et 20°C
- on effectue les étapes b) et c) à une pression comprise entre 5 et 70 bars,
- on effectue l'étape d) à une pression comprise entre 5 et 70 bars et à une température comprise entre -5°C et 30°C,
- on effectue l'étape e) à une pression comprise entre 0,1 et 20°bars.

6. Procédé selon l'une des revendications précédentes, dans lequel avant l'étape a), on effectue une étape de refroidissement de la solution liquide.

7. Procédé selon l'une des revendications précédentes, dans lequel la phase non miscible avec l'eau est choisie parmi le groupe suivant: les solvants hydrocarbonés, les solvants de type silicone, les solvants halogénés ou perhalogénés, et leurs mélanges.

8. Procédé selon l'une des revendications précédentes, dans lequel la solution liquide comporte, en outre, au moins un composé amphiphile non ionique, anionique, cationique, ou zwittérionique, ayant au moins la propriété anti-agglomération des hydrates.

9. Procédé selon l'une des revendications précédentes, dans lequel la solution liquide comporte, en outre, au moins un composé promoteurs d'hydrate choisi parmi le tétrahydrofurane et les composés ayant pour formule générale (I): 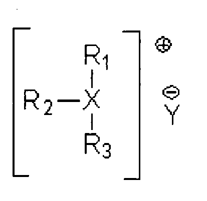
o avec X= S, N-R₄ ou P-R₄,
o Y est un anion choisi parmi le groupe constitué par un hydroxyle, un sulfate ou un halogène,
o R₁, R₂, R₃, R₄ sont identiques ou différents et choisis parmi le groupe constitué des radicaux alkyles en C1-C5 linéaires ou ramifiés.

10. Procédé selon la revendication 9, dans lequel la solution liquide comporte du tétrahydrofurane et un composé promoteur d'hydrates ayant pour formule générale (I).

11. Procédé selon l'une des revendications précédentes, dans lequel le gaz est une fumée de combustion et les composés acides comportent le CO2.

12. Procédé selon l'une des revendications 1 à 10, dans lequel le gaz est choisi parmi un gaz naturel, un gaz obtenu en queue du procédé Claus, un gaz de synthèse, un gaz de conversion, un gaz issus de la fermentation de biomasse et les composés acides comportent au moins l'un des éléments suivants : CO2 et H2S.
